# EUROPEAN PATENT SPECIFICATION

(11) **EP 1 260 691 B1**
(45) Date of publication and mention of the grant of the patent: **14.02.2007**
(21) Application number: 01130999.4
(22) Date of filing: 28.12.2001
(51) Int. Cl.: F02D 41/06, F02D 41/08, F02D 37/02, F02D 41/02, F02D 41/14

(54) **Engine control method for reducing emissions during cold start and idling for vehicle**
Verfahren zur Verminderung der Emissionen während des Kaltstarts und des Leerlaufs von Verbrennungskraftmaschinen
Méthode de réduction des émissions lors d'un démarrage à froid et au ralenti pour un moteur à combustion interne

(30) Priority: 23.05.2001 KR 2001028295
(43) Date of publication of application: 27.11.2002
(73) Proprietor: HYUNDAI MOTOR COMPANY, Seoul (KR)
(72) Inventor: Choi, Myung-Sik, Seoul, Korea (KR)
(74) Representative: Viering, Jentschura & Partner

(56) References cited:
- US-A- 3 646 924
- US-A- 5 482 017
- US-A- 5 875 761
- US-A- 5 913 299
- PATENT ABSTRACTS OF JAPAN vol. 015, no. 168 (M-1107), 26 April 1991 (1991-04-26) & JP 03 033452 A (TONEN CORP), 13 February 1991 (1991-02-13)

## Description

### BACKGROUND OF THE INVENTION

### (a) Field of the Invention

The present invention relates to an engine control method for a vehicle, and more particularly, to a method able to reduce hydrocarbon emissions during cold start and engine idling by controlling ignition timing and air/fuel ratio such that the engine can start and idle at a lean air/fuel mixture, and by controlling an amount of injected fuel effectively considering a quantity of wetting fuel.

### (b) Description of the Related Art

Generally, a vehicle engine is controlled on the basis of driving state, an amount of injected fuel, an amount of intake air, ignition timing and the like, and these control processes are performed according to a predetermined control logic by comparing signals of various sensors with data stored in an ECU (Electronic Control Unit).

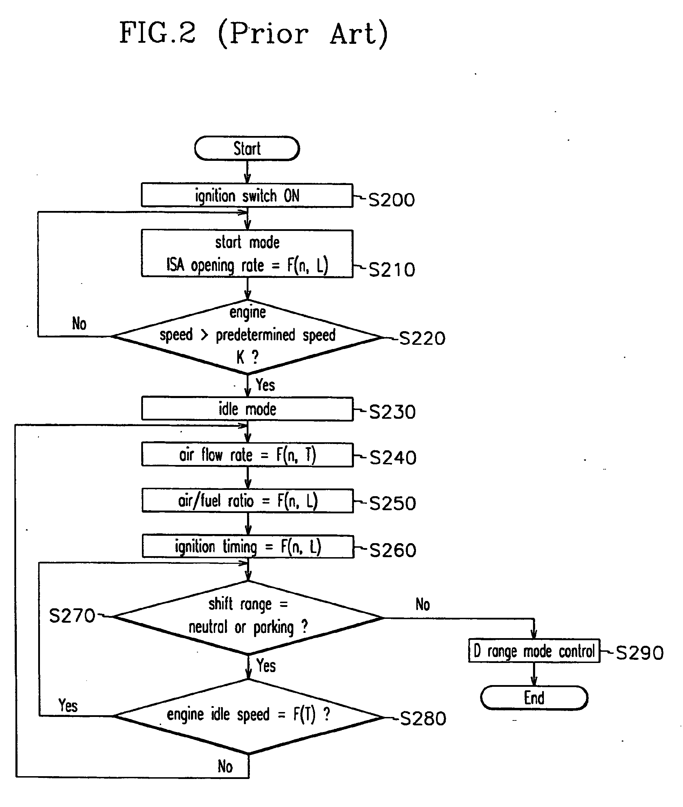

An idle control method according to a prior art, referring to Fig. 2, is described hereinafter.

If an ignition switch is turned on, the ECU detects an engine speed n and an engine load L and then calculates ISA opening rate therewith using a predetermined table. The ISA is opened with the calculated opening rate (S210).

The engine speed n and the engine load L can be acquired from the signals of the throttle position sensor and the crankshaft position sensor, and the ISA opening rate is acquired from a function of the engine speed n and the engine load L.

While the engine is operating under the acquired ISA opening rate, the ECU determines if the engine speed is higher than a predetermined speed K (S220). If the engine speed is higher than the predetermined speed K, the procedure enters into an idle mode (S230). If the engine speed is not higher than the predetermined speed K, the procedure returns to step S210 where the ECU regulates the ISA opening rate.

After step S230, the ECU calculates the air flow rate using the engine speed n and the coolant temperature T (S240), and also calculates the air/fuel ratio and the ignition timing using the engine speed n and the engine load L (S250 and S260).

The ECU then determines if the shift range is a neutral range or a parking range (S270). If it is determined that the shift range is the neutral range or the parking range, the ECU determines if present engine speed is equal to a predetermined engine idle speed, the predetermined engine idle speed being determined by the coolant temperature T (S280).

If it is determined that the present engine speed is not equal to the predetermined engine speed in step S280, the procedure returns to step S240.

If it is determined that the shift range is neither the neutral range nor the parking range but in a driving range in step S270, the ECU terminates the idle mode control and starts a D-range-mode control (S290).

In the engine control method according to the above prior art, feedback control is performed to approach the engine speed to a predetermined idle speed, and the engine speed is controlled by the amount of air intake using the ISA because frictional resistance of the engine is decreased as the engine operates. There is a limitation in an accurate control of the amount of air intake using the ISA, and thus the air/fuel ratio control and the ignition timing control is additionally performed for more accurate engine control.

If the ignition timing is retarded during the cold idle state to decrease a time period for activating a catalytic converter to minimize incompletely burned emissions, the ignition timing and the air/fuel ratio are changed because of the fluctuation of the amount of intake air by the ISA so that it is difficult to precisely control the engine, and therefore emissions increase.

Further, as the engine speed increases, the ISA is controlled in such a manner that the amount of intake air is decreased. Therefore, it becomes difficult to decrease the time period for activating the catalytic converter.

US 5 913 299 discloses a fuel supply control system for an internal combustion engine, comprising means for detecting a parameter indicative of a combustion stability of the engine, wherein said parameter is an amount of variation in rotational speed of the engine, and leaning means for leaning an air-fuel ratio of a mixture supplied to the engine over a time period from the start of the engine, which time period elapses before an exhaust gas-purifying device is activated, wherein said leaning means controls the air-fuel ratio in a manner such that said combustion stability of the engine becomes a predetermined combustion stability.

From US 3 646 924 a gaseous-fueled internal combustion engine is known, comprising a dual feed system for controlling fuel-air mixture depending on a temperature of the engine, wherein a lean fuel-air mixture is provided for starting the engine initially or idling it when the engine is cold, and wherein a richer mixture is provided for starting or operating the engine after the engine is already warmed up.

JP 03033452 discloses a fuel injection start timing control method for engine starting, wherein fuel injection start timing is controlled depending on a combustion chamber temperature. When the combustion chamber temperature is higher than a specific value, an injection valve is driven at the same time as turning-on of a starter switch so as to start fuel injection. On the other hand, when the combustion chamber temperature is lower than the specific value, a throttle valve is opened either fully or to the half depending on the temperature when the starter switch is turned on, and when the time set on a timer is up, the injection valve is opened to make fuel injection.

It is an object of the present invention to provide an engine control method for decreasing hydrocarbon emissions during cold start and engine idling by retarding the ignition timing and controlling the engine to idle under a lean air/fuel ratio, and controlling the amount of injected fuel according to a suitable quantity of wetting fuel.

To achieve the above object, the invention provides an engine control method comprising the features of claim 1.

Preferred embodiments of the method according to the invention are described in the dependent claims.

### BRIEF DESCRIPTION OF THE DRAWINGS

The accompanying drawings, which are incorporated in and constitute a part of the specification, illustrate an embodiment of the invention, and, together with the description, serve to explain the principles of the invention, where:
FIG. 1 is a block diagram of an engine control system to which an engine control method according to the present invention is applied;
FIG. 2 is a flowchart showing an engine control method according to the prior art; and
FIGs. 3a and 3b are flowcharts showing an engine control method according to the present invention.

### DETAILED DESCRIPTION OF THE PREFERRED EMBODIMENTS

Hereinafter, a preferred embodiment of the present invention will be described in detail with reference to the accompanied drawings.

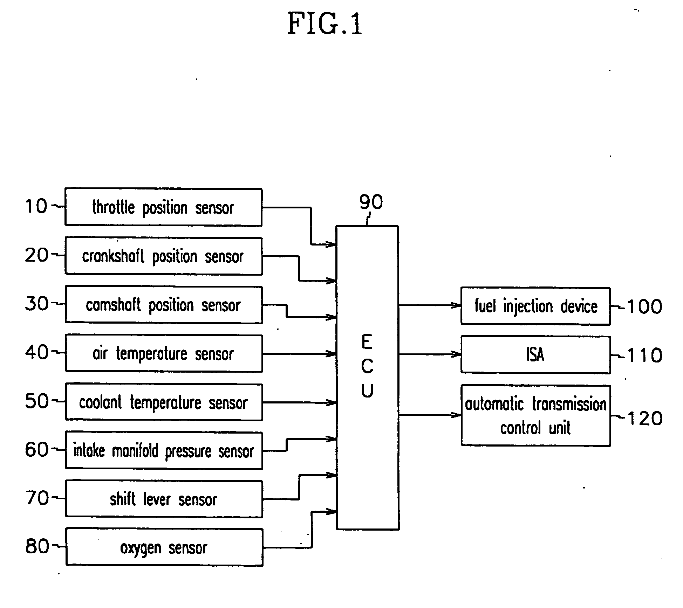

An engine control system to which the engine control method according to the present invention is applied, as shown in FIG. 1, comprises sensing members 10 to 80 detecting engine driving conditions and generating corresponding signals, and an ECU 90 receiving the signals and controlling various actuators according to a predetermined control logic such that the engine is in an optimal state.

The sensing members comprise a throttle position sensor 10 detecting an opening rate of a throttle valve, a crankshaft position sensor 20 detecting an angular displacement and rotational speed of a crankshaft, a camshaft position sensor 30 detecting an angular displacement of a camshaft, an air temperature sensor 40 detecting temperature of air supplied through an intake manifold, a coolant temperature sensor 50 detecting coolant temperature, an intake manifold pressure sensor 60 detecting pressure in the intake manifold, a shift lever sensor 70 detecting a shift range, and an oxygen sensor 80 detecting an amount of oxygen in an exhaust system.

Receiving various signals from the above sensors, the ECU 90 controls the engine to be in an optimal state by controlling the amount of intake air, the amount of injected fuel, the ignition timing and the like. Fuel injection control is generally performed by controlling an actuator of a fuel injection device 100, and idle control is generally performed by controlling an idle speed actuator (hereinafter referred to as an ISA) 110. The engine control system for the present invention also comprises an automatic transmission control unit 120.

The engine control method according to the present invention is performed using the engine control system of FIG. 1.

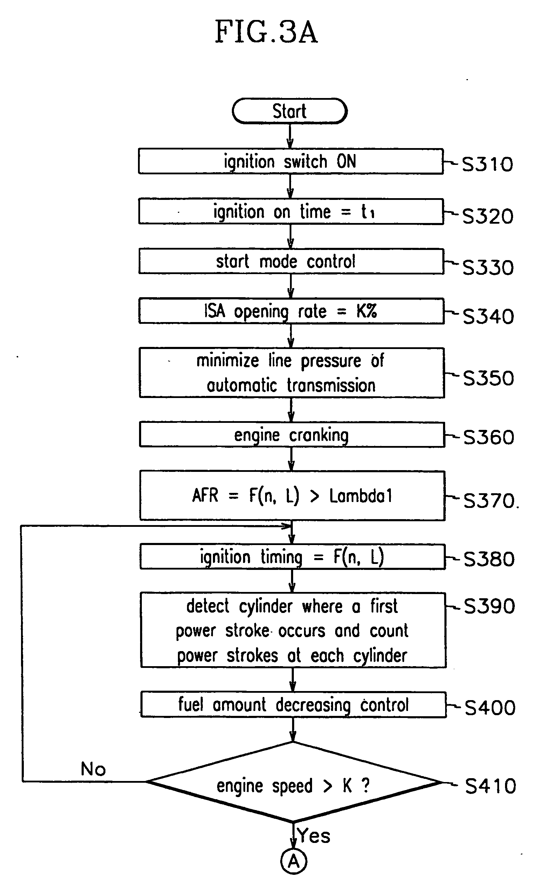

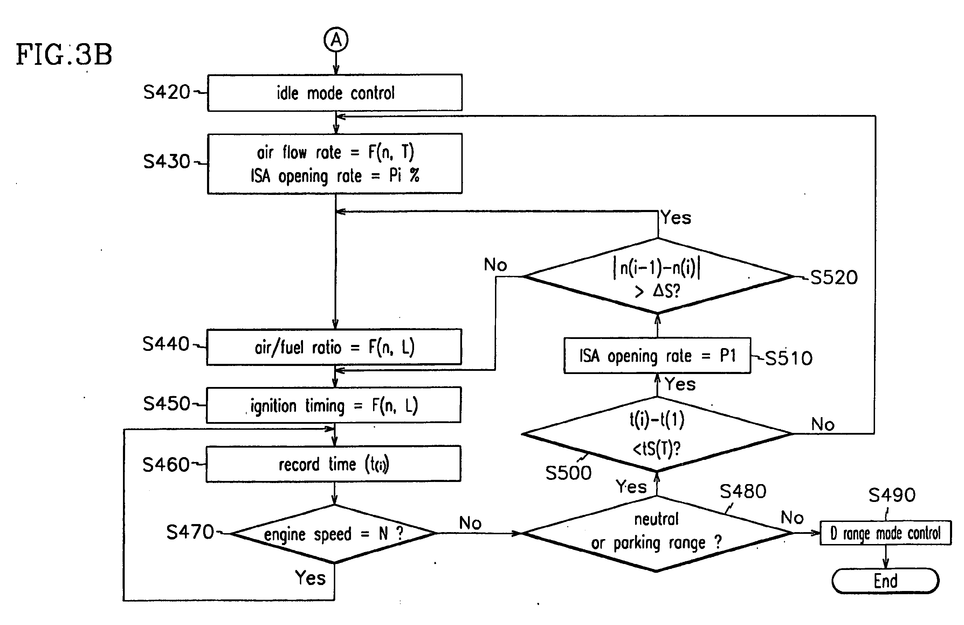

FIGs 3a and 3b are flowcharts showing the engine control method according to the present invention. The engine control method can be divided into two parts, e.g., start-mode control and idle-mode control.

If an ignition switch is turned on (S310), the ignition switch-on time is recorded (S320), and the procedure enters into start-mode control (S330).

The ECU sets the ISA opening rate as K% (S340). The amount of intake air is controlled such that the engine starts to rotate at an air/fuel ratio higher than a theoretical air/fuel ratio. Therefore, the K is preferably set as 100 or a value proximate to 100.

Also, an engine load is minimized before a start motor operates such that the engine can start to rotate at a lean air/fuel ratio. For this purpose, the ECU controls the automatic transmission control unit in such a way that line pressure of the automatic transmission is not generated, by operating a solenoid valve of a valve body line pressure regulator. If the engine load is decreased, the engine can start at a lean air/fuel ratio.

In a vehicle using the usual automatic transmission, as the engine starts to rotate, rotational force of the engine is transmitted to an input shaft of the automatic transmission through a torque converter, and an oil pump is operated so that the line pressure is generated thereby increasing the engine load. Therefore, if the line pressure is not generated, the engine load can be decreased. By operating the solenoid valve that controls the regulator valve of the automatic transmission, the line pressure can be prevented from being generated.

After step S350, the engine starts to crank (S360), and the ECU then calculates an engine speed n and an engine load L and controls the air/fuel ratio (AFR) according to a predetermined control logic (S370).

The air/fuel ratio AFR is determined as a function of the engine speed n and the engine load L. Preferably, the air/fuel ratio can be determined using a predetermined chart of the engine speed n and the engine load L.

If the engine starts at an air/fuel ratio higher than the theoretical air/fuel ratio, the hydrocarbon emissions decrease. Therefore, the air/fuel ratio is controlled to be higher than the theoretical air/fuel ratio.

The air/fuel ratio AFR of step S370 changes according to whether step S350 is performed or not, because the air/fuel ratio is affected by the engine load.

After the control of the air/fuel ratio in step S370, the ECU controls the ignition timing according to the engine speed n and the engine load L. The ignition timing is retarded as much as possible within a range in which a predetermined engine speed is maintained (S380).

After the control of the air/fuel ratio and the ignition timing in steps S370 and S380, the ECU determines a cylinder where a first power stroke occurs on the basis of signals of the crankshaft position sensor 20, and counts power strokes at each cylinder (S390).

The number of power strokes in a specific cylinder is acquired by detecting an angular acceleration of a crankshaft, and by determining that the specific cylinder is in power stroke if the detected angular acceleration is larger than a predetermined acceleration, and counting the number of times the specific cylinder is in power stroke.

After step S390, a control of the amount of injected fuel is performed on the basis of a quantity of wetting fuel (S400).

The quantity of wetting fuel is calculated using the number of power strokes of a specific cylinder and total power strokes of the engine, an intake manifold pressure, an air temperature, a coolant temperature, and an engine speed.

The number of power strokes of the specific cylinder and the total number of power strokes are considered in calculation of the quantity of wetting fuel because the former affects the temperature of the specific cylinder and the latter also affects the temperature of the cylinder through heat transfer to the specific cylinder. These have a close relation with the amount of hydrocarbon emissions.

More concretely, a large amount of fuel is injected in the early state of the engine starting, considering the amount of fuel wetting the cylinder wall in a cold state, and the amount of injected fuel is gradually decreased as the specific cylinder warms and the fuel is able to evaporate and no longer wets the cylinder wall, thereby being available to be efficiently burned.

However, an excessive amount of injected fuel in consideration of the wetting of the engine causes an increase in hydrocarbon emissions, and conversely, if the fuel is insufficiently provided, startability becomes worse and hydrocarbon emissions also increase.

If the wetting value is determined considering the number of power strokes of the specific cylinder and the total number of power strokes of the engine that affect the temperature of the cylinder, the problems of excessive hydrocarbon emissions and bad startability can be settled.

If the decrease control of the amount of injected fuel is performed in step S400 using the quantity of wetting fuel, the engine starts at a lean air/fuel ratio. The ECU then detects the engine speed, and determines if the detected engine speed is higher than a predetermined speed K (S410).

If it is determined that the present engine speed is higher than the predetermined speed K, the procedure enters into an idle-mode control (S420), and if it is determined that the present engine speed is not higher than the predetermined speed K, the procedure returns to step S380.

The ECU determines an air flow rate according to a changed engine speed and a changed coolant temperature, and controls the ISA opening rate to be P1% (S430).

The ISA opening rate P1 is an initial ISA opening rate, and the P1 is set at 100% such that a sufficient amount of intake air is supplied to the engine.

After step S430, the ECU performs the air/fuel ratio control on the basis of the engine speed n and the engine load L (S440), and performs the ignition timing control on the basis of the engine speed n and the engine load L (S450).

After the air/fuel ratio control and the ignition timing control, the engine speed changes. The ECU records an elapsed time t(i) from the start point when the ignition timing control is performed (S460), and then determines whether the engine speed is equal to a predetermined speed N (S470). The predetermined speed N is a target engine speed of the idle state.

If it is determined that the engine speed is equal to the predetermined speed N, the procedure returns to step S460, and if it is determined that the engine speed is not equal to the predetermined speed N, the ECU determines if the shift range is a neutral range or a parking range (S480).

If it is determined that the shift lever is neither in the neutral range nor the parking range but in a driving D range in step S480, the procedure enters into a driving mode, the ECU performs a D-range-mode control (S490), and the procedure then ends.

If it is determined that the shift range is the neutral range or the parking range in step S480, the ECU calculates an elapsed time from the engine start using the time t(i) recorded in step S460, and then determines whether the elapsed time from the engine start is smaller than predetermined time ts(T) (S500).

If it is determined that the elapsed time is not smaller than the predetermined time, the procedure returns to step S430.

The predetermined time is determined based on the coolant temperature T, and the elapsed time from the engine start is calculated by subtracting the time t(1) detected in step S320 from the time t(i) recorded in step S460 where the variable i has 1 added to it whenever the engine speed is equal to the predetermined speed N.

If it is determined that the elapsed time from the engine start is less than the predetermined time is step S500, the ECU resets the ISA opening rate with the initial opening rate P1 such that the ISA opening rate maintains the value determined in step S430 (S510). The ECU determines whether the engine speed difference between the present speed n(i) and the latest engine speed n(i-1) is greater than a predetermined speed change (S520), where the predetermined speed change is set as a speed change that can be controlled by the ignition timing control.

If it is determined that the engine speed difference is not greater than the predetermined speed change in step S520, the procedure returns to step S450 where the ECU performs the ignition timing control on the basis of engine speed and engine load. In this case, the ISA opening rate and the air/fuel ratio are maintained regardless of the change of the engine load.

If it is determined that the engine speed difference is greater than the predetermined speed change is step S520, the procedure returns to step S430.

When the engine speed fluctuation is controlled by regulating the ISA opening rate, the intake air amount violently changes so that the air/fuel ratio and the ignition timing also violently change and thereby time for activating the catalytic converter becomes increased.

Consequently, general idle control is performed when lambda closed loop control is possible. However, if the lambda closed loop control is impossible, the engine speed fluctuation that can be controlled only by the ignition timing control is controlled by the ignition timing in a state such that the ISA is fully opened.

Meanwhile, if the engine speed difference strays from the predetermined speed change that can be controlled only by the ignition timing control, the ECU controls the air/fuel ratio such that the engine speed fluctuation enters into the range where the engine speed fluctuation can be controlled only by the ignition timing control.

As stated above, by maximizing the intake air amount in the early state of engine start and minimizing the engine load, the engine control method according to the present invention controls the engine to be cranked at an air/fuel ratio leaner than the theoretical air/fuel ratio such that the THC emissions can be minimized.

Further, the fuel injection amount decreasing control is performed considering the number of power strokes of the specific cylinder and the total number of power strokes of the engine that affect the temperature of the cylinder so that the hydrocarbon emissions can be decreased.

## Claims

1. An engine control method for reducing hydrocarbon emissions during cold start and idling, the method comprising:
opening an ISA with a predetermined opening rate such that an air/fuel ratio becomes higher than a theoretical air/fuel ratio, and minimizing an engine load caused by an automatic transmission;
performing air/fuel ratio control and ignition timing control based on engine speed and engine load, and controlling an amount of injected fuel in consideration of a quantity of wetting fuel;
determining if an elapsed time from the moment when an ignition switch is turned on is smaller than a predetermined time;
fully opening the ISA if it is determined that the elapsed time from the moment the ignition switch is turned on is less than the predetermined time;
determining if a change in engine speed is greater than a predetermined critical speed change; and
controlling an engine speed fluctuation according to air/fuel ratio control and ignition timing control if the change in the engine speed is greater than the predetermined critical speed change, and controlling the engine speed fluctuation according to the ignition timing control if the change in the engine speed is not greater than the predetermined critical speed change.

2. The engine control method of claim 1, wherein in the opening step, the predetermined opening rate of the ISA is set as a maximum value such that the ISA is fully opened and thereby an engine is able to be started at an air/fuel ratio higher than the theoretical air/fuel ratio.

3. The engine control method of claim 1, wherein in the opening step, the engine load caused by the automatic transmission is minimized by controlling a line pressure of the automatic transmission such that it is not generated before a start motor operates.

4. The engine control method of claim 1, wherein in the performing step, the air/fuel ratio is set to be higher than the theoretical air/fuel ratio.

5. The engine control method of claim 1, wherein in the performing step, the quantity of wetting fuel is determined considering a number of power strokes in a specific cylinder and a total number of power strokes of an engine.

6. The engine control method of claim 5, wherein the quantity of wetting fuel is determined considering an intake manifold pressure, an air temperature, a coolant temperature and the engine speed in addition to the number of power strokes in the specific cylinder and the total number of power strokes.

7. The engine control method of claim 5, wherein the number of power strokes of the specific cylinder is acquired by determining which cylinder is in a power stroke and counting a number of times when the specific cylinder is in a power stroke, if an angular acceleration of a crankshaft is larger than a predetermined acceleration.

8. The engine control method of claim 1, wherein the predetermined time is determined according to the coolant temperature.

9. The engine control method of claim 1, wherein the predetermined critical speed change is determined as a maximum value below which the engine speed fluctuation can be controlled by ignition timing control.

10. The engine control method of claim 1, further comprising:
determining if an engine speed is equal to a predetermined idle speed;
determining if a shift lever is located in a neutral or parking range if it is determined that the engine speed is not equal to the predetermined idle speed; and
controlling the engine according to a driving range mode if it is determined that the shift lever is located neither in the neutral nor the parking range but in a driving range.

11. The engine control method of claim 1, further comprising:
determining the air flow rate according to the engine speed and the coolant temperature.

12. The engine control method of claim 1, wherein:
in the step of opening the ISA with a predetermined opening rate, the ISA is fully opened, and wherein in the step of minimizing the engine load caused by the automatic transmission, a line pressure of the automatic transmission is controlled such that it is not generated;
in the step of performing air/fuel ratio control, the air/fuel ratio is set as a value higher than a theoretical air/fuel ratio, and wherein in the step of controlling the amount of fuel injected considering a quantity of wetting fuel, the wetting fuel is determined in consideration of a number of power strokes in a specific cylinder and a total number of power strokes of a specific engine;
and wherein the method further comprises the steps of:
calculating an air flow rate based on an engine speed and a coolant temperature, and simultaneously fully opening the ISA,
determining if the engine speed is equal to a predetermined idle speed;
determining if a shift range is a neutral range or a parking range, if it is determined that the engine speed is not equal to the predetermined idle speed;
wherein the step of determining if an elapsed time from the moment when an ignition switch is turned on is less than a predetermined time is carried out, if the shift range is the neutral range or the parking range.

13. The engine control method of claim 12, wherein the quantity of wetting fuel is determined considering an intake manifold pressure, an air temperature, a coolant temperature and the engine speed in addition to the number of power strokes in the specific cylinder and the total number of power strokes.

14. The engine control method of claim 12, wherein the number of power strokes of the specific cylinder is acquired by determining which cylinder is in a power stroke and counting a number of times when the specific cylinder is in a power stroke, if an angular acceleration of a crankshaft is larger than a predetermined acceleration.

15. The engine control method of claim 12, wherein a time of the moment when the ignition switch is turned on is recorded, and wherein a time of a moment when the ignition timing control is performed is recorded, and wherein the elapsed time from the moment the ignition switch is turned on is obtained as a difference between the two recorded times.

16. The engine control method of claim 12, further comprising a step of controlling an engine according to a driving range mode, if it is determined that the shift range is neither the neutral range nor the parking range but the driving range.

17. The engine control method of claim 12, wherein the predetermined critical speed change is determined as a maximum value below which the engine speed fluctuation can be controlled by ignition timing control.

18. The engine control method of claim 12, if it is determined that the elapsed time from the moment when the engine starts is greater than the predetermined critical time, further comprising a step of determining an air flow rate based on engine speed and engine load, and controlling an engine speed fluctuation by controlling the air/fuel ratio and ignition timing.

## Patentansprüche

1. Motor-Regelungs-Verfahren zum Reduzieren der Kohlenwasserstoff-Emissionen während des Kaltstarts und des Leerlaufs, wobei das Verfahren aufweist:
Öffnen eines ISA mit einer vorbestimmten Öffnungsrate, so dass das Luft/Kraftstoff-Verhältnis größer wird als das theoretische Luft/Kraftstoff-Verhältnis, und Minimieren der Motorlast, welche durch das automatische Getriebe verursacht wird,
Durchführen einer Luft/Kraftstoff-Verhältnis-Regelung und einer Zündzeitpunkt-Regelung basierend auf der Motordrehzahl und der Motorlast sowie Regeln der Menge von eingespritztem Kraftstoff unter Berücksichtigung der Menge von Benetzungs-Kraftstoff,
Ermitteln, ob die verstrichene Zeit von dem Moment an, wenn der Zündschalter eingeschaltet wird, kleiner ist als eine vorbestimmte Zeit,
vollständiges Öffnen des ISA, wenn ermittelt wird, dass die verstrichene Zeit von dem Moment des Einschaltens des Zündschalters an kleiner ist als die vorbestimmte Zeit,
Ermitteln, ob eine Änderung der Motordrehzahl größer ist als eine vorbestimmte kritische Drehzahländerung, und
Regeln der Motordrehzahl-Schwankung gemäß einer Luft/Kraftstoff-Verhältnis-Regelung und einer Zündzeitpunkt-Regelung, wenn die Änderung der Motordrehzahl größer ist als die vorbestimmte kritische Drehzahländerung, und Regeln der Motordrehzahl-Schwankung gemäß der Zündzeitpunkt-Regelung, wenn die Änderung der Motordrehzahl nicht größer ist als die vorbestimmte kritische Drehzahländerung.

2. Motor-Regelungs-Verfahren nach Anspruch 1, wobei bei dem Öffnungs-Schritt die vorbestimmte Öffnungsrate des ISA auf einen Maximalwert eingestellt wird, so dass das ISA vollständig geöffnet wird und **dadurch** der Motor bei einem Luft/Kraftstoff-Verhältnis, welches größer ist als das theoretische Luft/Kraftstoff-Verhältnis, gestartet werden kann.

3. Motor-Regelungs-Verfahren nach Anspruch 1, wobei bei dem Öffnungs-Schritt die Motorlast, welche durch das automatische Getriebe verursacht wird, minimiert wird, indem der Leitungsdruck des automatischen Getriebes derart geregelt wird, dass er nicht erzeugt wird, bevor ein Start-Motor arbeitet.

4. Motor-Regelungs-Verfahren nach Anspruch 1, wobei bei dem Durchführungs-Schritt das Luft/Kraftstoff-Verhältnis größer eingestellt wird als das theoretische Luft/Kraftstoff-Verhältnis.

5. Motor-Regelungs-Verfahren nach Anspruch 1, wobei bei dem Durchführungs-Schritt die Menge von Benetzungs-Kraftstoff unter Berücksichtigung der Anzahl von Arbeitshüben in einem bestimmten Zylinder und der Gesamtanzahl von Arbeitshüben des Motors bestimmt wird.

6. Motor-Regelungs-Verfahren nach Anspruch 5, wobei die Menge von Benetzungs-Kraftstoff unter Berücksichtigung des Ansaugleitungsdrucks, der Lufttemperatur, der Kühlmitteltemperatur und der Motordrehzahl zusätzlich zu der Anzahl von Arbeitshüben in dem bestimmten Zylinder und der Gesamtanzahl von Arbeitshüben ermittelt wird.

7. Motor-Regelungs-Verfahren nach Anspruch 5, wobei die Anzahl von Arbeitshüben des bestimmten Zylinders erhalten wird, indem ermittelt wird, welcher Zylinder in einem Arbeitshub ist, und indem die Anzahl der Zeitpunkte, zu denen der bestimmte Zylinder in einem Arbeitshub ist, gezählt wird, wenn die Winkelbeschleunigung der Kurbelwelle größer ist als eine vorbestimmte Beschleunigung.

8. Motor-Regelungs-Verfahren nach Anspruch 1, wobei die vorbestimmte Zeit gemäß der Kühlmitteltemperatur bestimmt wird.

9. Motor-Regelungs-Verfahren nach Anspruch 1, wobei die vorbestimmte kritische Drehzahländerung als ein Maximalwert bestimmt wird, unterhalb dessen die Motordrehzahl-Schwankung mittels der Zündzeitpunkt-Regelung geregelt werden kann.

10. Motor-Regelungs-Verfahren nach Anspruch 1, ferner aufweisend:
Ermitteln, ob die Motordrehzahl gleich einer vorbestimmten Leerlaufdrehzahl ist,
Ermitteln, ob der Schalthebel in einem neutralen Bereich oder einem Parkbereich angeordnet ist, wenn ermittelt wird, dass die Motordrehzahl nicht gleich der vorbestimmten Leerlaufdrehzahl ist, und
Regeln des Motors gemäß einem Fahrbereich-Modus, wenn ermittelt wird, dass der Schalthebel weder in dem neutralen Bereich noch in dem Parkbereich sondern in dem Fahrbereich angeordnet ist.

11. Motor-Regelungs-Verfahren gemäß Anspruch 1, ferner aufweisend:
Bestimmen des Luftdurchsatzes gemäß der Motordrehzahl und der Kühlmitteltemperatur.

12. Motor-Regelungs-Verfahren nach Anspruch 1, wobei:
bei dem Schritt des Öffnens des ISA mit einer vorbestimmten Öffnungsrate das ISA vollständig geöffnet wird, und wobei bei dem Schritt des Minimierens der Motorlast, welche durch das automatische Getriebe verursacht wird, der Leitungsdruck des automatischen Getriebes derart geregelt wird, dass er nicht erzeugt wird,
bei dem Schritt des Durchführens der Luft/Kraftstoff-Verhältnis-Regelung das Luft/Kraftstoff-Verhältnis auf einen Wert eingestellt wird, welcher größer ist als ein theoretisches Luft/Kraftstoff-Verhältnis, und wobei bei dem Schritt des Regelns der Menge von eingespritztem Kraftstoff, wobei die Menge von Benetzungs-Kraftstoff berücksichtigt wird, der Benetzungs-Kraftstoff unter Berücksichtigung der Anzahl von Arbeitshüben in einem bestimmten Zylinder und der Gesamtanzahl von Arbeitshüben eines bestimmten Motors bestimmt wird,
und wobei das Verfahren ferner die Schritte aufweist:
Berechnen des Luftdurchsatzes basierend auf der Motordrehzahl und der Kühlmitteltemperatur und gleichzeitiges vollständiges Öffnen des ISA,
Ermitteln, ob die Motordrehzahl gleich einer vorbestimmten Leerlaufdrehzahl ist,
Ermitteln, ob der Schaltbereich in einem neutralen Bereich oder einem Parkbereich ist, wenn ermittelt wird, dass die Motordrehzahl nicht gleich der vorbestimmten Leerlaufdrehzahl ist,
wobei der Schritt des Ermittelns, ob die verstrichene Zeit von dem Moment an, wenn der Zündschalter eingeschaltet wird, kleiner ist als eine vorbestimmte Zeit, durchgeführt wird, wenn der Schaltbereich der neutrale Bereich oder der Parkbereich ist.

13. Motor-Regelungs-Verfahren nach Anspruch 12, wobei die Menge von Benetzungs-Kraftstoff unter Berücksichtigung des Ansaugleitungsdrucks, der Lufttemperatur, der Kühlmitteltemperatur und der Motordrehzahl zusätzlich zu der Anzahl von Arbeitshüben in dem bestimmten Zylinder und der Gesamtanzahl von Arbeitshüben bestimmt wird.

14. Motor-Regelungs-Verfahren nach Anspruch 12, wobei die Anzahl von Arbeitshüben des bestimmten Zylinders erhalten wird, indem ermittelt wird, welcher Zylinder in einem Arbeitshub ist, und indem die Anzahl der Zeitpunkte gezählt wird, zu denen der bestimmte Zylinder in einem Arbeitshub ist, wenn die Winkelbeschleunigung der Kurbelwelle größer ist als eine vorbestimmte Beschleunigung.

15. Motor-Regelungs-Verfahren nach Anspruch 12, wobei der Zeitpunkt des Moments, wenn der Zündschalter eingeschaltet wird, aufgezeichnet wird, und wobei der Zeitpunkt des Moments, wenn die Zündzeitpunkt-Regelung durchgeführt wird, aufgezeichnet wird, und wobei die verstrichene Zeit von dem Moment des Einschaltens des Zündschalters an aus der Differenz zwischen den zwei aufgezeichneten Zeitpunkten erhalten wird.

16. Motor-Regelungs-Verfahren nach Anspruch 12, ferner aufweisend den Schritt des Regelns des Motors gemäß einem Fahrbereich-Modus, wenn ermittelt wird, dass der Schaltbereich weder der neutrale Bereich noch der Parkbereich, sondern der Fahrbereich ist.

17. Motor-Regelungs-Verfahren nach Anspruch 12, wobei die vorbestimmte kritische Drehzahländerung als ein Maximalwert bestimmt wird, unterhalb dessen die Motordrehzahl-Schwankung mittels der Zündzeitpunkt-Regelung geregelt werden kann.

18. Motor-Regelungs-Verfahren nach Anspruch 12, ferner aufweisend den Schritt des Bestimmens eines Luftdurchsatzes basierend auf der Motordrehzahl und der Motorlast und des Regelns der Motordrehzahl-Schwankung mittels Regelns des Luft/Kraftstoff-Verhältnisses und des Zündzeitpunkts, wenn ermittelt wird, dass die verstrichene Zeit von dem Moment an, wenn der Motor startet, größer ist als die vorbestimmte kritische Zeit.

## Revendications

1. Procédé de commande de moteur pour réduire les émissions d'hydrocarbures pendant le démarrage à froid et le ralenti, le procédé comprenant les étapes consistant à :
ouvrir un ISA (actionneur de vitesse de ralenti) à un degré d'ouverture prédéterminé qui est tel qu'un rapport air/carburant devienne supérieur à un rapport air/carburant théorique, et réduire à un minimum une charge de moteur due à une transmission automatique ;
exécuter une commande du rapport air/carburant et une commande du calage de l'allumage en se basant sur la vitesse du moteur et sur la charge du moteur ;
commander une quantité de carburant injectée en fonction d'une quantité de carburant resté liquide ;
déterminer si un temps écoulé à partir du moment où un interrupteur d'allumage est tourné sur marche est inférieur à un temps prédéterminé ;
ouvrir entièrement le ISA s'il est déterminé que le temps écoulé à partir du moment où l'interrupteur d'allumage est tourné sur marche est inférieur au temps prédéterminé ;
déterminer si une variation de la vitesse du moteur est supérieure à une variation de vitesse critique prédéterminée ; et
commander la fluctuation de vitesse du moteur en fonction de la commande du rapport air/carburant et de la commande du calage de l'allumage si la variation de la vitesse du moteur est supérieure à la variation de la vitesse critique prédéterminée et commander la fluctuation de la vitesse du moteur en fonction de la commande du calage de l'allumage si la variation de la vitesse du moteur n'est pas supérieure à la variation de vitesse critique prédéterminée.

2. Procédé de commande de moteur selon la revendication 1, dans lequel, dans l'étape d'ouverture, le degré d'ouverture prédéterminé du ISA est fixé à une valeur maximale telle que le ISA soit entièrement ouvert, et que, de ce fait, un moteur puisse démarrer à un rapport air/carburant supérieur au rapport air/carburant théorique.

3. Procédé de commande de moteur selon la revendication1, dans lequel, dans l'étape d'ouverture, la charge du moteur due à la transmission automatique est réduite à un minimum en commandant une pression de ligne de la transmission automatique de telle manière qu'elle ne soit pas établie avant qu'un moteur de démarreur entre en action.

4. Procédé de commande de moteur selon la revendication 1, dans lequel, dans l'étape d'exécution, le rapport air/carburant est fixé à une valeur supérieure au rapport air/carburant théorique.

5. Procédé de commande de moteur selon la revendication1, dans lequel, dans l'étape d'exécution, la quantité de carburant resté liquide est déterminée en considérant un nombre de courses de combustion dans un cylindre particulier et un nombre total de courses de combustion du moteur.

6. Procédé de commande de moteur selon la revendication 5, dans lequel, la quantité de carburant resté liquide est déterminée d'après une pression du collecteur d'admission, une température d'air, une température de liquide de refroidissement, et la vitesse du moteur en supplément du nombre de courses de combustion dans le cylindre particulier et du nombre total de courses de combustion.

7. Procédé de commande de moteur selon la revendication 5, dans lequel, le nombre de courses de combustion du cylindre particulier est acquis en déterminant quel est le cylindre qui est dans une course de combustion et en comptant le nombre de fois que le cylindre particulier est dans une course de combustion si une accélération angulaire d'un vilebrequin est supérieure à une accélération prédéterminée.

8. Procédé de commande de moteur selon la revendication 1, dans lequel, le temps prédéterminé est déterminé d'après la température du liquide de refroidissement.

9. Procédé de commande de moteur selon la revendication 1, dans lequel, la variation de vitesse critique prédéterminée est déterminée en tant que valeur maximale au-dessous de laquelle la fluctuation de la vitesse du moteur peut être commandée par la commande du calage de l'allumage.

10. Procédé de commande de moteur selon la revendication 1, comprenant en outre les étapes consistant à :
déterminer si une vitesse du moteur est égale à une vitesse de ralenti prédéterminée ;
déterminer si un levier sélecteur est placé dans une gamme de point mort ou de stationnement s'il est déterminé que la vitesse du moteur n'est pas égale à la vitesse de ralenti prédéterminée ; et
commander le moteur en fonction d'un mode de gamme d'entraînement s'il est déterminé que le levier sélecteur est placé, non pas dans une gamme de point mort ni dans une gamme de stationnement mais dans une gamme d'entraînement.

11. Procédé de commande de moteur selon la revendication 1, comprenant en outre l'étape consistant à :
déterminer le débit d'air d'après la vitesse du moteur et la température du liquide de refroidissement.

12. Procédé de commande de moteur selon la revendication 1, dans lequel :
dans l'étape d'ouverture du ISA à un degré d'ouverture prédéterminé, le ISA est entièrement ouvert et dans lequel dans l'étape de réduction à un minimum de la charge du moteur due à la transmission automatique, une pression de ligne de la transmission automatique est commandée de manière qu'elle ne soit pas établie ;
dans l'étape d'exécution de la commande du rapport air/carburant, le rapport air/carburant est fixé à une valeur supérieure à un rapport air/carburant théorique et dans lequel, dans l'étape consistant à commander la quantité de carburant injecté en fonction d'une quantité de carburant resté liquide, le carburant resté liquide est déterminé en fonction d'un nombre de courses de combustion dans un cylindre particulier et d'un nombre total de courses de combustion d'un cylindre particulier ;
et dans lequel le procédé comprend en outre les étapes consistant à :
calculer un débit d'air en se basant sur une vitesse du moteur et sur une température du liquide de refroidissement et, en même temps, ouvrir entièrement le ISA, déterminer si la vitesse du moteur est égale à une vitesse de ralenti prédéterminée ;
déterminer si une gamme de rapport est dans une gamme de point mort ou dans une gamme de stationnement s'il est déterminé que la vitesse du moteur n'est pas égale à la vitesse de ralenti prédéterminée ;
dans lequel l'étape consistant à déterminer si un temps écoulé à partir du moment où un interrupteur d'allumage est tourné sur marche est inférieur à un temps prédéterminé, est exécutée si la gamme de rapport est dans la gamme de point mort ou dans la gamme de stationnement.

13. Procédé de commande de moteur selon la revendication 12, dans lequel la quantité de carburant resté liquide est déterminée en considérant une pression de collecteur d'admission, une température d'air, une température du liquide de refroidissement et la vitesse du moteur en supplément du nombre de courses de combustion dans le cylindre particulier et du nombre total de courses de combustion.

14. Procédé de commande de moteur selon la revendication 12, dans lequel le nombre de courses de combustion du cylindre particulier est acquis en déterminant quel est le cylindre qui est dans une course de combustion et en comptant un nombre de fois que le cylindre particulier est dans une courses de combustion si une accélération angulaire d'un vilebrequin est supérieure à une accélération prédéterminée.

15. Procédé de commande de moteur selon la revendication 12, dans lequel un temps du moment où l'interrupteur d'allumage est tourné sur marche est enregistré, et
dans lequel un temps d'un moment où la commande du calage de l'allumage est exécutée est enregistré, et dans lequel le temps écoulé à partir du moment où l'interrupteur d'allumage est tourné sur marche est obtenu sous la forme d'une différence entre les deux temps enregistrés.

16. Procédé de commande de moteur selon la revendication 12, comprenant en outre une étape consistant à commander un moteur conformément à un mode de gamme d'entraînement s'il est déterminé que la gamme de variation n'est ni la gamme de point mort, ni la gamme de stationnement mais qu'elle est la gamme d'entraînement.

17. Procédé de commande de moteur selon la revendication 12, la variation de vitesse critique prédéterminée est déterminée en tant que valeur maximale au-dessous de laquelle la fluctuation de la vitesse du moteur peut être commandée par la commande du calage de l'allumage.

18. Procédé de commande de moteur selon la revendication 12 qui, s'il est déterminé que le temps écoulé à partir du moment où le moteur démarre est plus grand que le temps critique prédéterminé, comprend en outre une étape consistant à déterminer un débit d'air en se basant sur la vitesse du moteur et sur la charge du moteur et à commander une fluctuation de la vitesse du moteur en commandant le rapport air/carburant et le calage de l'allumage.
